Europäisches Patentamt

European Patent Office

Office européen des brevets

(19)

(11) Veröffentlichungsnummer: **0 004 101**
A2

(12)

# EUROPÄISCHE PATENTANMELDUNG

(21) Anmeldenummer: 79100800.6

(22) Anmeldetag: 15.03.79

(51) Int. Cl.²: **B 62 D 55/10**
F 16 F 9/10, B 60 G 13/08

(30) Priorität: 15.03.78 DE 2811201

(43) Veröffentlichungstag der Anmeldung:
19.09.79 Patentblatt 79/19

(84) Benannte Vertragsstaaten:
BE IT NL SE

(71) Anmelder: W.A.M. International Establishment
P.O. Box 69330
FL-9494 Schaan(LI)

(72) Erfinder: Selt, Horst
Haus Nr. 28
D-8061 Steinbach b. Moorenweis(DE)

(74) Vertreter: Wallach, Curt, Dipl.-Ing. et al,
Kaufingerstrasse 8
D-8000 München 2(DE)

(54) Stossdämpfer.

(57) Bei einem mit einem Druckmedium arbeitenden Stoßdämpfer mit einer Zylinderbüchse (1) für einen Kolben (3) ist
die am Kolben (3) befestigte Kolbenstange (2) durch eine
Bohrung in einem Gehäusedeckel (13, 26, 29) dichtend hindurchgeführt.
    Zur Einsparung des Raums, der üblicherweise für die
Auslenkung des Stoßdämpfers bei der Dämpfung von
Bewegungen von Teilen erforderlich ist, deren Anlenkpunkt
an dem Stoßdämpfer bei der Bewegung eine Kurve oder
eine nicht mit der Stoßdämpferachse fluchtende Gerade
beschreibt, ist ein den Deckel (12) tragendes, die Zylinderbüchse (1) umgebendes Gehäuse (13) (oder ein Teil des Dek-
kels (26) oder der Deckel (29) selbst) aus hochelastischem
Material hergestellt und die Mantelfläche (4) des Kolbens (3)
ist derart kugelförmig ausgebildet, daß die Kolbenstangenachse (23) zur Zylinderachse (22) unter Beibehaltung des
die Abdichtung hervorrufenden Kolbendurchmessers neigbar ist.

EP 0 004 101 A2

./.

Fig.1

Fig.2

Fig.3

Stoßdämpfer

Die Erfindung betrifft einen Stoßdämpfer nach dem Oberbegriff des Anspruchs 1. Stoßdämpfer, deren am zu bedämpfenden Teil liegender Anlenkpunkt bei der Bewegung eine Kurve oder eine nicht mit der Stoßdämpferachse fluchtende Gerade beschreibt, müssen gelenkig abgestützt sein. Derartige Anlenkungen (vgl. beispielsweise DE-PS 920 709, DE-AS 11 81 565, FR-PS 1 056 323) sind platzaufwendig, insbesondere dann, wenn erhebliche Kräfte abgestützt werden, wie z.B. bei der Abfederung von in gekröpften Wellen oder in Schwingen gelagerten Laufrädern von schweren Kettenfahrzeugen. Gerade in diesem Beispielsfall, aber auch in an-

deren Fällen, ist der Platz für eine solche Anlenkung sehr knapp.

Diesen Nachteil vermeidet die Erfindung, der die
Aufgabe zugrunde liegt, den üblicherweise für die
Anlenkung erforderlichen Raum einzusparen.

Gelöst wird diese Aufgabe durch die Maßnahme nach
dem Kennzeichen des Anspruchs 1. Die Erfindung
legt somit den in Rede stehenden Anlenkpunkt in
den Stoßdämpfer hinein, und zwar in die Höhe des
Kolbens.

Durch die DE-OS 22 13 692 ist zwar ein Stoßdämpfer
bekannt, bei dem die Mantelfläche der beiden Kolben im mittleren Bereich zylindrisch, an beiden
Enden konisch verläuft. Mit dieser Maßnahme wird eine
besondere Drosselung des Druckmediums beim Übertritt
von der einen zur anderen Kolbenseite erreicht;
eine Neigung des bekannten Kolbens im Sinne der
Erfindung ist dadurch nicht möglich. Ferner erwähnt dieser Stand der Technik an der Durchführung der Kolbenstange durch den Deckel eine verformbare Dichtung. Diese Verformbarkeit dient

jedoch lediglich dazu, mit Hilfe des Druckmediums die Dichtwirkung zu erhöhen. Eine Verformbarkeit im Sinne der Erfindung liegt dort nicht vor.

Die Ansprüche 2 und 3 geben Ausführungsbeispiele für die Wahl des hochelastischen Teiles an, der eine Neigungsbewegung der Kolbenstange zuläßt. Diese Ausführungsbeispiele sind in der Zeichnung dargestellt und im folgenden erläutert.

Dabei zeigen

Fig. 1 einen Stoßdämpfer in einem Längsschnitt und

Fig. 2 und 3 je ein Schema einer abgewandelten Kolbenstangenführung.

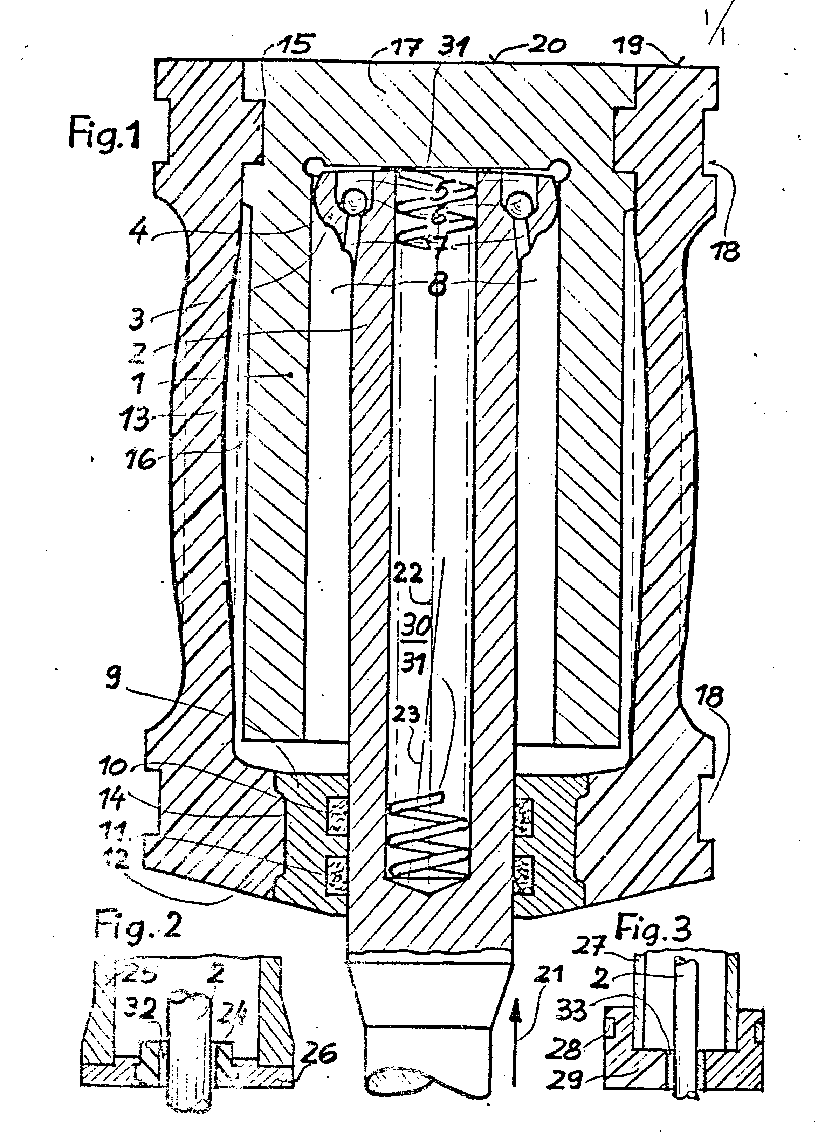

Der in Fig. 1 gezeigte Stoßdämpfer weist einen Zylinder 1 aus Metall auf, in dem ein an einer Kolbenstange 2 angesetzter Kolben 3 geführt ist. Letzterer ist an seiner Führungsfläche, der Mantelfläche 4, kugelförmig ausgebildet. Ferner sind im Kolben 3 stirnseitig mehrere abgesetzte Bohrungen 5/7 eingearbeitet, in denen sich im Sinne eines Rückschlagventils wirkende Kugeln 6 befinden. Die Bohrungen 5/7 verbinden die Stirnfläche des Kolbens 3 mit dem Zylinderraum 8, in dem sich ein Druckmedium z.B. Öl, befindet.

Die teilweise mit einer Längsbohrung 30 versehene Kolbenstange 2 wird an ihrem freien Ende durch ein Führungsstück 9 aus Metall hindurchgeführt, wobei nicht im einzelnen dargestellte Dichtpackungen 10 und 11 in bekannter Weise die Abdichtung des Zylinderraums 8 gegenüber der Atmosphäre übernehmen. Das Führungsstück 9 ist in einen Deckelteil 12 aus hochelastischem Material, z.B. Gummi oder Kunststoffelastomer, einvulkanisiert und mittels eines Absatzes 14 in Längsrichtung gesichert. An den Deckelteil 12 schließt sich einstückig ein die Zylinderbüchse 1 mit kleinem Abstand (Raum 16) umgebendes Gehäuse 13 an, das am oberen Ende mittels eines Absatzes 15 im Zylinderboden 17 festsitzt und das mittels nicht gezeigter Bandagen befestigt wird, die in zwei Ringnuten 18 des Gehäuses 13 eingelegt werden. Auf den Raum 16 kann verzichtet werden. In diesem Fall liegt das Gehäuse 13 eng auf der Zylinderbüchse 1.

Die Funktionsweise des Stoßdämpfers ist folgende: Die in Fig. 1 gezeigte Stellung des Kolbens 3 und der Kolbenstange 2 ist die Endstellung auf

- 5 -

Grund einer stoßartigen Belastung von unten nach oben (Pfeil 21). Am unteren Ende der Kolbenstange 2 ist der Stoßdämpfer über ein nicht gezeigtes Gelenk mit einem beweglichen, Stößen ausgesetzten Maschinenteil verbunden, oder liegt an diesem an, z.B. an der Schwinge eines Laufrades eines Kettenfahrzeugs, wogegen die in Längsrichtung des Stoßdämpfers nach oben wirkende Kraft über die Stirnflächen 19 und 20 des Gehäuses 13 bzw. des Zylinderbodens 17 auf eine ortsfeste, nicht dargestellte Fläche übertragen wird.

Diese Belastung hatte zur Folge, daß die zunächst tiefer gelegene Kolbenstange 2 nach oben gedrückt wurde und das Druckmedium, das sich vor der stoßartigen Belastung im Raum zwischen dem Kolben 3 und dem Zylinderboden 17 befand, zwischen der kugelförmigen Mantelfläche 4 und der inneren Mantelfläche der Zylinderbüchse 1 hindurch nach unten gedrückt wurde und so der Kolbenstange 2 erlaubte, nach oben bis zum Anschlag zu wandern (Fig. 1). Dabei waren die Bohrungen 7 durch die Kugeln 6 abgesperrt, d.h., das Rückschlagventil war geschlossen. Das nach unten strömende Druckmittel wurde dabei nicht nur in den
Zylinderraum 8 gedrückt, sondern auch in den
Raum 16 zwischen der Außenfläche der Zylinderbüchse 1 und der Innenfläche des Gehäuses 13.
Unter dem hierbei entstehenden Druck baucht
sich das Gehäuse 13, das aus hochelastischem
Material ist, aus. Der aufzufangende Stoß wird
also mit Hilfe der Drosselstelle am Kolben 3
aufgenommen und absorbiert.

Bei Beendigung des Stoßes wird die Kolbenstange 2
durch eine in der Längsbohrung 30 befindliche
Feder 31 aus der in Fig. 1 dargestellten obersten
Lage nach unten bewegt. Dabei fließt das Druckmedium von dem Zylinderraum 8 über die Bohrungen 5/7 bei etwas abgehobenen Kugeln 6 in den Raum
zwischen dem Kolben 3 und Zylinderboden 17 zurück. Die Aufweitung des Gehäuses 13 verliert
sich wieder.

Bei der Bewegung des Kolbens 3 und der Kolbenstange 2 wird angenommen, daß die Bewegung nicht geradlinig und parallel zur Zylinderachse 22 erfolgt, sondern so, daß die Kolbenstange 2 in der
unteren Endstellung entsprechend der Linie 23 geneigt ist (Neigungswinkel in übertriebener Darstellung). Eine derartige Neigung wird ermöglicht
durch die kugelförmige Mantelfläche 4 des Kolbens
3 und durch die Nachgiebigkeit des hochelastischen
Dekelteils 12 zwischen der Bohrung, in der das
Führungsstück 9 sitzt, und der unteren Ringnut 18.
Die Kugelform der Mantelfläche 4 ist derart, daß
der als Drossel dienende Ringspalt zwischen dem
Kolben 3 und der Zylinderbüchse 1 in der in Fig. 1
dargestellten Lage des Kolbens 3 und bei verschiedenen Neigungen der Kolbenstange 2 gleichbleibt.

Die Neigbarkeit der Kolbenstange 2 wird nach Fig. 2
durch ein hochelastisches Einsatzstück 24 in dem
am Zylinder 25 befestigten starren Deckel 26 und
nach Fig. 3 durch einen insgesamt aus hochelastischem Material gefertigten, am Zylinder 27 durch
eine Bandage 28 befestigten Deckel 29 ermöglicht,
wobei die Kolbenstange 2 in einer Büchse 32 bzw.
33 aus Metall geführt ist. In beiden Fällen sind die
Dichtungen in der Büchse 32 bzw. 33 nicht dargestellt.

Patentansprüche:

1. Mit einem Druckmedium arbeitender Stoßdämpfer mit einer Zylinderbüchse für einen Kolben, wobei eine am Kolben befestigte Kolbenstange durch die Bohrung in einem Gehäusedeckel dichtend hindurchgeführt ist, g e k e n n z e i c h n e t durch ein hochelastisches Material für den Deckel (29) oder einen Teil (Deckelteil 12, Einsatzstück 24) des Deckels (26) und/oder für das den Deckel (12) tragende, die Zylinderbüchse (1) umgebende Gehäuse (13) und durch eine kugelförmige Ausbildung der Mantelfläche (4) des Kolbens (3) derart, daß die Kolbenstangenachse (23) zur Zylinderachse (22) unter Beibehaltung des die Abdichtung hervorrufenden Kolbendurchmessers neigbar ist.

2. Stoßdämpfer nach Anspruch 1, d a d u r c h g e - k e n n z e i c h n e t , daß der radial äußere Deckelteil (12) hochelastisch ausgebildet ist.

- 2 -

0004101

3. Stoßdämpfer nach Anspruch 2, mit einem Gehäuseteil aus hochelastischem Material, d a d u r c h g e k e n n z e i c h n e t , daß das Gehäuse (13) und der Deckelteil (12) einstückig ausgebildet sind.

Fig.1

Fig.2

Fig.3

0004101
1/1